(19) Europäisches Patentamt
European Patent Office
Office européen des brevets

(11) Numéro de publication : **0 032 339**
**B1**

(12) **FASCICULE DE BREVET EUROPÉEN**

(45) Date de publication du fascicule du brevet : **22.06.83**

(51) Int. Cl.$^3$ : **C 08 F 10/02**, C 08 F 4/62

(21) Numéro de dépôt : **80401846.3**

(22) Date de dépôt : **23.12.80**

# (54) Catalyseurs de polymérisation de l'éthylène, leur procédé de fabrication et un procédé de polymérisation utilisant lesdits catalyseurs.

(30) Priorité : **28.12.79 FR 7931911**

(43) Date de publication de la demande : **22.07.81 Bulletin 81/29**

(45) Mention de la délivrance du brevet : **22.06.83 Bulletin 83/25**

(84) Etats contractants désignés : **AT BE CH DE GB IT LI LU NL SE**

(56) Documents cités :
**FR A 1 260 454**
**FR A 2 311 033**

(73) Titulaire : **Société Chimique des Charbonnages**
**Tour Aurore Place des Reflets Cedex no 5**
**F-92080 Paris La Défense 2 (FR)**

(72) Inventeur : **Bujadoux, Karel**
**31, Avenue van Pelt**
**F-62300 Lens (FR)**

(74) Mandataire : **Dubost, Thierry**
**Société Chimique des Charbonnages Service Propriété Industrielle B.P. No 1**
**F-62160 Bully Les Mines (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 032 339 B1

# Catalyseurs de polymérisation de l'éthylène, leur procédé de fabrication et un procédé de polymérisation utilisant lesdits catalyseurs

La présente invention concerne des catalyseurs de polymérisation de l'éthylène et, plus particulièrement, des catalyseurs de type Ziegler ayant une structure de solution solide.

De nombreuses variétés de catalyseurs de type Ziegler sont déjà connues pour la polymérisation de l'éthylène et des α-oléfines. Ces catalyseurs comprennent généralement le constituant catalytique proprement dit, consistant en au moins un composé halogéné d'un métal de transition des groupes IV à V de la Classification Périodique, et un activateur choisi parmi les hydrures et les composés organométalliques des métaux des groupes I à III de la Classification Périodique. Le constituant catalytique comprenant le métal de transition peut, le cas échéant, être fixé sur un support inerte tel que l'alumine, la silice, la magnésie, les halogénures de magnésium.

La présente invention se rapporte plus particulièrement à des catalyseurs de type Ziegler comprenant au moins deux composés halogénés de métaux de transition dont l'un est un composé halogéné du titane syncristallisé avec un composé halogéné d'un métal du groupe III de la Classification Périodique et dont l'autre est un composé halogéné d'un métal des groupes VB et VIB de la Classification Périodique, ces catalyseurs pouvant être fixés sur un support inerte.

La littérature donne quelques exemples de catalyseurs de type Ziegler comprenant deux composés halogénés de deux métaux de transition différents : par exemple le brevet français n° 1 348 983 décrit des constituants catalytiques pour polymériser notamment l'éthylène ayant pour formule $(TiCl_3, VCl_3)_x$, x étant compris entre 0,25 et 4, et autorisant un rendement catalytique de 15 grammes de polymère par milliatome de titane et vanadium et par heure à 40 °C. De même le brevet américain n° 3 223 651 décrit un catalyseur de formule :

$$y\ TiCl_3,\ (1-y)\ VCl_3,\ 0{,}33\ AlCl_3,$$

y étant compris entre 0,5 et 0,97, capable de produire un effet de synergie pour la polymérisation des α-oléfines à une température inférieure à 100 °C et sous une pression inférieure à 35 bars.

D'autre part il est connu de polymériser l'éthylène sous une pression comprise entre 300 et 2 500 bars et à une température comprise entre 180 °C et 300 °C. Dans le cadre d'un tel procédé on cherche à améliorer d'une part le rendement de production par rapport au catalyseur utilisé et d'autre part la qualité du polymère produit en modifiant notamment les paramètres suivants : masse volumique, masse moléculaire, répartition des masses moléculaires. Le but de la présente invention consiste donc à mettre au point des catalyseurs utilisables pour polymériser l'éthylène dans les conditions de haute température et de haute pression définies ci-dessus et capables d'améliorer le rendement et la qualité du polymère produit.

Les catalyseurs de polymérisation de l'éthylène selon l'invention ont pour formule :

$$(TiCl_3,\ 1/3\ AlCl_3)\ (MX_3)_x(MgX_2)_y$$

dans laquelle $0{,}3 \leq x \leq 3$, $0 \leq y \leq 20$, M est un métal de transition des groupes VB et VIB de la Classification Périodique et X est un halogène. Ces catalyseurs ont une structure de solution solide binaire Ti-M qui peut être caractérisée par la dimension de ses cristallites. On a trouvé que, du point de vue de l'efficacité de ces catalyseurs, cette dimension déterminée par la méthode d'analyse radiocristallographique (loi de Sherrer) dans la direction perpendiculaire au plan (3 0 0) doit être de préférence inférieure ou égale à 100 angstroems (Å) (10 nm). Comme on le comprend par leur formule développée, ces catalyseurs peuvent le cas échéant (lorsque $y > 0$) être fixés sur un support inerte constitué d'un halogénure de magnésium anhydre. Parmi les métaux M, le vanadium et le chrome sont préférés, mais on peut employer le molybdène et le tungstène. L'halogène de l'halogénure de magnésium et celui de l'halogénure du métal M peuvent être identiques ou différents et sont choisis parmi le fluor, le chlore, le brome et l'iode.

Le comportement des catalyseurs selon l'invention vis-à-vis de la polymérisation de l'éthylène comprend un aspect important qui les rend spécialement adaptés à un emploi dans des conditions de pression élevée et de température élevée : on a constaté en effet que, contrairement aux catalyseurs de l'art antérieur déjà cité, ils ne présentent pas le phénomène de synergie du rendement de production dans les conditions de basse pression mais seulement dans les conditions de pression et température élevées.

Le procédé de fabrication préféré des catalyseurs selon l'invention consiste à mettre en contact le trichlorure de titane syncristallisé avec le chlorure d'aluminium, l'halogénure du métal M et le cas échéant l'halogénure de magnésium anhydre pendant une durée suffisamment longue pour que la dimension (déterminée comme ci-dessus) des cristallites de la solution solide obtenue soit inférieure à 100 angstroems (10 mm). Ceci peut être obtenu efficacement en soumettant les trois chlorures précités à une étape de broyage dans laquelle l'énergie de broyage serait au moins égale à 3 kWh par kg de matière solide traitée. Plus précisément, on a observé que l'efficacité de ces catalyseurs dans la polymérisation de l'éthylène est d'autant plus grande que cette énergie de broyage est plus élevée. Toutefois, afin d'optimiser cette efficacité compte tenu du coût opératoire et de la nécessité d'économiser l'énergie, il

n'est généralement pas nécessaire que l'énergie de broyage soit supérieure à environ 25 KWh par kg de matière solide traitée.

On a trouvé par ailleurs que, en vue d'un emploi dans des conditions de basse pression et de température modérée, il est souhaitable de sélectionner des catalyseurs selon l'invention pour lesquels $2 \leq y \leq 20$. Cette catégorie particulière des catalyseurs selon l'invention trouve donc des applications plus variées puisqu'elle pourra être utilisée dans tous les procédés de polymérisation de l'éthylène quelles que soient leurs conditions de température et pression.

La présente invention se rapporte aussi à des procédés de polymérisation de l'éthylène utilisant les catalyseurs précédemment définis dans des conditions sélectionnées. Un premier procédé selon l'invention consiste à mettre l'éthylène, sous une pression comprise entre 300 et 2 500 bars environ et à une température comprise entre 180° et 300 °C environ, en présence d'un système catalytique comprenant (a) au moins un catalyseur de formule $(TiCl_3\ 1/3\ AlCl_3)\ (MX_3)_x(MgX_2)_y$ dans laquelle $0{,}3 \leq x \leq 3$, $0 \leq y \leq 20$, M est un métal de transition des groupes VB et VIB de la Classification Périodique et X est un halogène et (b) au moins un activateur choisi parmi les hydrures et les composés organométalliques des métaux des groupes I à III de la Classification Périodique, le rapport atomique du métal de l'activateur à la somme Ti + M étant compris entre 0,1 et 10, et le temps de séjour moyen du système catalytique dans le réacteur de polymérisation étant compris entre 2 et 100 secondes. Ce temps de séjour dépend de la température dans le réacteur en ce sens qu'il est d'autant plus élevé que la température est plus basse. Ce premier procédé peut mettre en jeu, notamment lorsque la température et/ou la pression de polymérisation ne sont pas très élevés, la présence d'un hydrocarbure inerte ayant de préférence moins de 5 atomes de carbone tel que par exemple propane ou butane.

Un second procédé de polymérisation de l'éthylène selon l'invention consiste à mettre l'éthylène, sous une pression comprise entre 1 et 200 bars, en solution ou en suspension dans un hydrocarbure liquide inerte ayant au moins 6 atomes de carbone choisi de préférence parmi les aliphatiques ou cycloaliphatiques saturés et les aromatiques, en présence d'un système catalytique comprenant (a) au moins un catalyseur de formule $(TiCl_3\ 1/3\ AlCl_3)\ (MX_3)_x\ (MgX_2)_y$ dans laquelle $0{,}3 \leq x \leq 3$, $2 \leq y \leq 20$, M est un métal de transition des groupes VB et VIB de la Classification Périodique et X est un halogène, et (b) au moins un activateur choisi parmi les hydrures et les composés organométalliques des métaux des groupes I à III de la Classification Périodique, le rapport atomique du métal de l'activateur à la somme Ti + M étant compris entre 1 et 1 000. Dans ce type de procédé, le temps de séjour moyen du système catalytique dans le réacteur de polymérisation est généralement de plusieurs minutes et peut atteindre jusqu'à quelques heures.

Lorsque dans le procédé haute pression on utilise un réacteur autoclave ou tubulaire ayant plusieurs zones réactionnelles, il pourra être avantageux, en vue de produire certaines qualités de polymères, d'adopter une disposition particulière de l'installation de polymérisation comme par exemple l'une de celles décrites dans les brevets français n° 2 346 374 et 2 385 745. Souvent il sera utile pour contrôler l'indice de fluidité du polymère, notamment du polyéthylène, d'effectuer la polymérisation en présence d'un agent de transfert de chaîne comme l'hydrogène. Dans le procédé haute pression, cet agent sera utilisé à raison de 0,04 à 2 % en volume par rapport à l'éthylène.

Le procédé selon l'invention permet, en ce qui concerne la polymérisation ou la copolymérisation de l'éthylène, de produire toute une gamme de polymères dont la masse volumique est comprise entre 0,905 et 0,960 g/cm$^3$ et dont l'indice de fluidité est compris entre 0,1 et 100 dg/mn environ. Les polymères de masse volumique relativement basse, par exemple comprise entre 0,905 et 0,935 g/cm$^3$, sont obtenus en copolymérisant l'éthylène avec une $\alpha$-oléfine ayant de 3 à 8 atomes de carbone, par exemple le propène à raison de 15 à 35 % en poids, ou bien le butène-1 à raison de 15 à 60 % en poids.

Les procédés selon l'invention permettent d'améliorer d'une part le rendement de production par rapport au catalyseur utilisé et d'autre part la qualité du polymère produit en modifiant les paramètres de masse volumique, masse moléculaire et répartition des masses moléculaires. D'autres avantages de l'invention apparaîtront à la lecture des exemples suivants.

## Exemples 1 à 3

Dans un broyeur discontinu à billes, on introduit d'une part du trichlorure de titane syncristallisé avec du chlorure d'aluminium $TiCl_3$, 1/3 $AlCl_3$, d'une part du trichlorure de chrome $CrCl_3$ (et, pour l'exemple 3, du trichlorure de vanadium $VCL_3$) en quantités telles que les rapports atomiques Cr/Ti et V/Ti soient égaux aux valeurs indiquées dans le tableau I. Après deux heures de cobroyage, le catalyseur obtenu est dispersé dans du méthycyclohexane et activé par du diméthyléthyldiéthylsiloxalane en quantité telle que le rapport atomique Al/Ti soit égal à 6. On effectue alors la polymérisation de l'éthylène (le cas échéant en présence de propène comonomère selon la proportion en poids indiquée dans le tableau I) en continu sous une pression de 600 bars dans un réacteur autoclave de volume 0,6 l maintenu à la température de 230 °C en injectant la dispersion de catalyseur ainsi préparée de telle sorte que le temps de séjour moyen du catalyseur dans le réacteur soit égal à 30 secondes environ. De l'hydrogène est injecté dans le réacteur selon la quantité indiquée au Tableau I ci-après indique, outre les conditions opératoires, le rendement catalytique Rc exprimé en kilogrammes de polyéthylène par milliatome de titane, l'indice de fluidité IF mesuré selon la norme ASTM D 1 238 et exprimé en dg/mn, et la masse volumique $\rho$ exprimée en g/cm$^3$.

Tableau I

| Exemple | Cr/Ti | V/Ti | % $H_2$ | % $C_3H_6$ | $R_c$ | IF | ρ |
|---|---|---|---|---|---|---|---|
| 1 | 0,33 | 0 | 0,5 | 0 | 3,0 | 3,6 | 0,948 |
| 2 | 1 | 0 | 0,25 | 29,5 | 1,1 | 12,8 | 0,932 |
| 3 | 0,33 | 0,67 | 0,25 | 29,5 | 3,1 | 3,2 | 0,932 |

Exemples 4 et 5

Dans un broyeur discontinu à billes on introduit d'une part du trichlorure de titane syncristallisé avec du chlorure d'aluminium $TiCl_3$, 1/3 $AlCl_3$, et d'autre part du trichlorure de vanadium $VCl_3$ en quantités telles que le rapport atomique V/Ti soit égal à 6. On polymérise alors l'éthylène en continu sous une pression de 1 200 bars dans un réacteur autoclave cylindrique de volume 3 l divisé, au moyen d'écrans, en trois zones identiques dont la première est maintenue à la température de 260 °C. La température $T_2$ de la seconde zone est variable selon les exemples et indiquée dans le tableau II. La dispersion de catalyseur est injectée dans le réacteur de telle sorte que le temps de séjour moyen du catalyseur dans le réacteur soit de l'ordre de 30 secondes. On injecte de l'hydrogène dans le réacteur, en quantité indiquée dans le tableau II, pour contrôler l'indice de fluidité du polyéthylène produit. Le tableau II ci-après indique, outre les conditions opératoires, le rendement $R_c$ exprimé en kg de polymère par milliatome de titane et vanadium, l'indice de fluidité IF, la masse volumique ρ, ainsi que la masse moléculaire moyenne en nombre Mn et le pourcentage B de masses moléculaires inférieures à 5 000 déterminés par chromatographie de perméation de gel.

Exemples 6 et 7 (Comparatifs)

On opère de façon identique aux expériences des exemples 4 et 5 si ce n'est que le catalyseur introduit dans le réacteur est constitué uniquement de trichlorure de titane $TiCl_3$ 1/3 $AlCl_3$ pour l'exemple 6, et uniquement de trichlorure de vanadium $VCl_3$ pour l'exemple 7. Les différentes conditions opératoires et les résultats de polymérisation sont consignés dans le tableau II ci-après.

Tableau II

| Exemple | 4 | 5 | 6 | 7 |
|---|---|---|---|---|
| V/Ti | 1 | 2 | 0 | ∞ |
| $T_2$ °C | 170 | 220 | 245 | 240 |
| % $H_2$ | 2,1 | 2,3 | 1,7 | 1,0 |
| $R_c$ | 10,1 | 7,7 | 3,4 | 3,0 |
| IF | 7,3 | 7,2 | 6,2 | 6,9 |
| ρ | 0,958 | 0,958 | 0,954 | 0,956 |
| Mn | 17 000 | 17 500 | 11 500 | 9 000 |
| B | 5,9 | 5,8 | 10,0 | 12,8 |

Ainsi il apparaît clairement, par comparaison entre les exemples 4 et 5 d'une part, 6 et 7 d'autre part, que les catalyseurs selon l'invention permettent, pour les polymères d'indices de fluidité équivalents, d'accroître fortement le rendement catalytique ainsi que la masse moléculaire tout en diminuant le taux de faibles masses moléculaires et en augmentant la masse volumique.

Exemples 8 à 11

Dans un broyeur discontinu à billes dont la puissance spécifique est de 0,8 kW par kilogramme de matière traitée on introduit des quantités équimoléculaires de $TiCl_3$ et de $VCl_3$. Après une opération de cobroyage de durée t exprimée en heures, le catalyseur obtenu est soumis à une analyse radiocristallographique permettant de déterminer, selon la loi de Scherrer, la dimension c des cristallites dans le plan (3 0 0). On observe que le catalyseur a une structure de solution solide. Après cette analyse, le catalyseur est dispersé dans du méthylcyclohexane et activé par du diméthyléthyldiéthylsiloxalane en quantité telle que le rapport atomique Al/Ti + V soit égal à 6.

On polymérise alors l'éthylène en continu selon la même procédure opératoire qu'aux exemples 4 et 5, la température $T_2$ étant maintenue constante à 230 °C. Le tableau III ci-après indique, outre la durée de broyage du catalyseur, le rendement $R_c$ exprimé comme aux essais 4 à 7, la masse volumique ρ, la masse moléculaire Mn, le pourcentage B et la dimension c exprimée en angstroems.

Tableau III

| Exemple | t | $R_c$ | ρ | Mn | B | c |
|---|---|---|---|---|---|---|
| 8 | 0 | 2,0 | 0,954 | 10 000 | 10,9 | 2 000 |
| 9 | 4 | 7,1 | 0,958 | 15 000 | 7,3 | 100 |
| 10 | 8 | 9,8 | 0,956 | 16 500 | 5,9 | 80 |
| 11 | 15 | 12,5 | 0,954 | 22 500 | 4,2 | 60 |

Exemple 12

Le catalyseur obtenu conformément à l'exemple 9 est dispersé dans du méthylcyclohexane puis activé par du monofluorodiéthylaluminium en quantité telle que le rapport atomique Al/Ti + V soit égal à 6. On polymérise alors l'éthylène en continu sous une pression de 600 bars en présence de 0,5 % en moles d'hydrogène, dans un réacteur autoclave cyclindrique de volume 0,6 l maintenu à la température de 230 °C. La dispersion du catalyseur est injectée dans le réacteur de telle sorte que le temps de séjour moyen du catalyseur dans le réacteur soit de l'ordre de 30 secondes.

On obtient alors un polyéthylène d'indice de fluidité égal à 8,2 dg/mn avec un rendement catalytique de 6,1 kg de polymère par milliatome de titane et vanadium.

Exemple 13 et 14

Dans un broyeur discontinu à billes, on applique une énergie de broyage de 4 kWh par kg de matière traitée à un mélange de $TiCl_3$ 1/3 $AlCl_3$ et $VCl_3$ dans les proportions molaires indiquées au tableau IV. Le catalyseur obtenu, dispersé dans du méthylcyclohexane et activé par du diméthyléthyldiéthylsiloxalane selon un rapport atomique Al/Ti + V = 6 est utilisé pour polymériser l'éthylène en continu sous une pression de 1 200 bars dans un réacteur autoclave cylindrique de volume 31 maintenu à la température de 240 °C, le temps de séjour moyen du catalyseur dans ce réacteur étant d'environ 30 secondes. Le tableau IV ci-après indique, outre le rapport atomique V/Ti dans le catalyseur, les résultats de polymérisation mesurés comme pour les exemples précédents.

Tableau IV

| Exemple | V/Ti | $R_c$ | ρ | $M_n$ | B |
|---|---|---|---|---|---|
| 13 | 0,5 | 6,2 | 0,959 | 22 000 | 3,9 |
| 14 | 3 | 6,0 | 0,959 | 21 500 | 4,0 |

Exemples 15 à 17

Dans un broyeur discontinu à billes on applique une énergie de broyage E, exprimée en kWh par kg de matière traitée, à un mélange de $TiCl_3$ 1/3 $AlCl_3$, de $VCl_3$ et de $MgCl_2$ dans les proportions molaires indiquées au tableau V ci-après. Le catalyseur obtenu, dispersé dans une coupe $C_{11}$-$C_{12}$ d'hydrocarbures et activé par du diméthyléthyldiéthylsiloxalane selon un rapport atomique Al/Ti + V = 100, est utilisé pour polymériser l'éthylène en solution dans la coupe $C_{11}$-$C_{12}$ susmentionnée, dans un réacteur autoclave en acier de contenance 1 litre, à une température de 200 °C et sous une pression de 6 bars, pendant une durée d'une minute. La solution est ensuite récupérée et le polymère séparé par filtration après refroidissement.

Le tableau V ci-après indique, outre les conditions opératoires, le rendement catalytique $R_c$ exprimé en grammes de polymères par gramme de titane par minute et par atmosphère.

Tableau V

| Exemple | V/Ti | Mg/Ti | E | $R_c$ |
|---|---|---|---|---|
| 15 | 1 | 6 | 4,0 | 606 |
| 16 | 1 | 12 | 6,1 | 678 |
| 17 | 2 | 12 | 3,1 | 474 |

Exemples 18 à 20

Le catalyseur obtenu conformément à l'exemple 15 est dispersé dans du méthylcyclohexane puis activé par du diméthyléthyldiéthylsiloxalane (exemples 18 et 19) ou par un mélange équimoléculaire de monochlorodiéthylaluminium et du trioctylaluminium (exemple 20) selon un rapport atomique Al/Ti + V égal à 6. On polymérise alors l'éthylène en présence de ce système catalytique :

— dans un réacteur autoclave cylindrique de volume 0,6 l maintenu à une température de 230 °C et sous une pression de 600 bars, pour ce qui concerne l'exemple 18,

— dans un réacteur autoclave cylindrique de volume 3 l maintenu à une température de 240 °C et sous une pression de 1 200 bars, pour ce qui concerne les exemples 19 et 20,

le temps de séjour moyen du catalyseur dans le réacteur étant de l'ordre de 30 secondes. Le tableau VI ci-après indique les résultats de polymérisation, et notamment le rendement $R_c$, la masse volumique $\rho$, la masse moléculaire $M_n$ et le pourcentage B.

Exemple 21

Le catalyseur obtenu conformément à l'exemple 17, dispersé dans du méthylcyclohexane puis activé par du diméthyléthyldiéthylsiloxalane selon un rapport atomique Al/Ti + V égal à 6, est utilisé pour polymériser l'éthylène dans un réacteur autoclave cylindrique de volume 3 l maintenu à une température de 240 °C et sous une pression de 1 200 bars, le temps de séjour moyen du catalyseur dans le réacteur étant de l'ordre de 30 secondes.

Le tableau VI ci-après indique les résultats de cette polymérisation.

Tableau VI

| Exemple | $R_c$ | $\rho$ | $M_n$ | B |
|---|---|---|---|---|
| 18 | 9,5 | 0,958 | 12 500 | 5,4 |
| 19 | 6,5 | 0,957 | 29 500 | 2,4 |
| 20 | 7,4 | 0,956 | 18 500 | 4,5 |
| 21 | 6,5 | 0,962 | 24 000 | 3,2 |

Exemple 22

Le catalyseur obtenu conformément à l'exemple 16, dispersé dans du méthylcyclohexane et activé par du diméthyléthyldiéthylsiloxane selon un rapport atomique Al/Ti + V égal à 6, est utilisé pour copolymériser l'éthylène et le propène (30 % en poids) dans un réacteur autoclave cylindrique de volume 0,6 l maintenu sous une pression de 600 bars et à une température de 230 °C, en présence de 0,25 % en moles d'hydrogène. Un copolymère de masse volumique 0,939 g/cm$^3$ et d'indice de fluidité 7,2 dg/mn est produit avec un rendement catalytique de 4,1 kg par milliatome de titane et vanadium.

**Revendications**

1. Catalyseurs de polymérisation de l'éthylène comprenant au moins deux composés halogénés de métaux de transition, dont l'un est un trichlorure de titane syncristallisé avec le chlorure d'aluminium, caractérisés en ce qu'ils ont pour formule :

$$(TiCl_3, 1/3\ AlCl_3)\ (MCl_3)_x\ (MgX_2)_y$$

dans laquelle $0,3 \leq x \leq 3$, $0 \leq y \leq 20$, M est un métal de transition des groupes VB et VIB de la

Classification Périodique et X est un halogène.

2. Catalyseurs selon la revendication 1, caractérisés en ce qu'ils ont une structure de solution solide binaire Ti-M dont les cristallites ont une dimension inférieure ou égale à 100 angstroems (10 nm).

3. Catalyseurs selon la revendication 1, caractérisés en ce que $2 \leq y \leq 20$.

4. Procédé de fabrication des catalyseurs selon l'une des revendications 1 à 3, caractérisé en ce que l'on met en contact le trichlorure de titane syncristallisé avec le chlorure d'aluminium, le trichlorure du métal M et, le cas échéant, l'halogénure de magnésium anhydre et en ce que l'on soumet ces chlorures à une étape de broyage au cours de laquelle l'énergie de broyage est au moins égale à 3 kWh par kg de matière solide traitée.

5. Procédé de fabrication selon la revendication 4, caractérisé en ce que l'énergie de broyage n'est pas supérieure à 25 kWh par kg de matière solide traitée.

6. Procédé de polymérisation de l'éthylène sous une pression comprise entre 300 et 2 500 bars et à une température comprise entre 180° et 300 °C, caractérisé en ce qu'on met l'éthylène en présence d'un système catalytique comprenant :

(a) au moins un catalyseur selon la revendication 1, et

(b) un activateur choisi parmi les hydrures et les composés organométalliques des métaux des groupes I à III de la Classification Périodique, le rapport atomique du métal de l'activateur à la somme Ti + M étant compris entre 0,1 et 10, et le temps de séjour moyen du système catalytique dans le réacteur de polymérisation étant compris entre 2 et 100 secondes.

7. Procédé selon la revendication 6, caractérisé en ce que la polymérisation est effectuée en présence d'un hydrocarbure inerte ayant de préférence moins de 5 atomes de carbone tel que propane ou butane.

8. Procédé selon l'une des revendications 6 et 7, caractérisé en ce que la polymérisation est effectuée en présence de 0,04 à 2 % en volume d'un agent de transfert de chaîne.

9. Procédé selon l'une des revendications 6 à 8, caractérisé en ce qu'il est appliqué à la copolymérisation de l'éthylène avec une α-oléfine ayant de 3 à 8 atomes de carbone.

10. Procédé selon la revendication 9, caractérisé en ce que l'α-oléfine est le propène et est présente à raison de 15 à 35 % en poids.

11. Procédé selon la revendication 9, caractérisé en ce que l'α-oléfine est le butène-1 et est présente à raison de 15 à 60 % en poids.

12. Procédé de polymérisation de l'éthylène sous une pression comprise entre 1 et 200 bars en solution ou en suspension dans un hydrocarbure liquide inerte ayant au moins 6 atomes de carbone, caractérisé en ce qu'on met l'éthylène en présence d'un système catalytique comprenant :

(a) au moins un catalyseur selon la revendication 3, et

(b) un activateur choisi parmi les hydrures et les composés organométalliques des métaux des groupes I à III de la Classification Périodique. Le rapport atomique du métal de l'activateur à la somme Ti+M étant compris entre 1 et 1 000.

## Claims

1. A catalyst for polymerizing ethylene comprising at least two halogen compounds of transition metals, one of which is a titanium trichloride syncristallized with aluminium chloride, characterized in that it has the formula :

$$(TiCl_3,\ 1/3\ AlCl_3)\ (MCl_3)_x\ (MgX_2)_y$$

wherein $0.3 \leq x \leq 3$, $0 \leq y \leq 20$, M is a transition metal of groupe VB and VIB of the Periodic System and X is a halogen.

2. A catalyst according to Claim 1, characterized in that it has a binary solid solution structure Ti-M of which the dimension of crystallites is less than or equal to 100 Angstroem units (10 nm).

3. A catalyst according to claim 1, characterized in that $2 \leq y \leq 20$.

4. A process for manufacturing a catalyst according to any of claims 1 to 3, characterized in that titanium trichloride crystallized together with aluminium chloride, the trichloride of metal M and, optionnaly, anhydrous magnesium halide are brought into contact, and in that the said three halides are submitted to a milling step in which the milling energy is at least equal to 3 kWh per kg of solid material treated.

5. A process according to claim 4, characterized in that the milling energy is not above 25 kWh per kg of solid material treated.

6. A process for polymerizing ethylene under a pressure between 300 and 2 500 bars and at a temperature between 180° and 300 °C, characterized in that ethylene is brought into the presence of a catalytic system comprising.

a) at least a catalyst according to claim 1, and

b) an activator selected from the hydrides and organometallic compounds of metals of Group I to III

of the Periodic System, the atomic ratio of the metal of the activator to the sum Ti + M lying between 0,1 and 10 and the mean residence time of the catalytic system in the polymerization reactor lying between 2 and 100 seconds.

7. A process according to claim 6, characterized in that polymerization is effected in the presence of an inert hydrocarbon having less than 5 carbon atoms.

8. A proces according to any of claims 6 and 7, characterized in that polymerization is effected in the presence of 0,04 to 2 % by volume of a chain transfer agent.

9. A process according to any of claims 6 to 8, characterized in that said process is applied to the copolymerization of ethylene with an α-olefin having from 3 to 8 carbon atoms.

10. A process according to claim 9, characterized in that the α-olefin is propene and is present at the rate of 15 to 35 % by weight.

11. A process according to claim 9, characterized in that the α-olefin is butene-1 and is present at the rate of 15 to 60 % by weight.

12. A process for polymerizing ethylene under a pressure between 1 and 200 bars and at a temperature between 20° and 200 °C, in solution or suspension in an inert liquid hydrocarbon having at least 6 carbon atoms, characterized in that ethylene is brought in the presence of a catalytic system comprising

a) at least a catalyst according to claim 3, and

b) activator selected from the hydrides and organometallic compounds of metals of Group I to III of the Periodic System, the atomic ratio of the metal of the activator to the sum Ti + M lying between 1 and 1 000.

## Ansprüche

1. Katalysatoren zur Polymerisation von Äthylen, die mindestens zwei Halogenverbindungen von Übergangsmetallen, von welchen die eine ein mit Aluminiumchlorid synkristallisiertes Titantrichlorid ist, enthalten, dadurch gekennzeichnet, daß sie die allgemeine Formel:

$$(TiCl_3,\ 1/3\ AlCl_3)\ (MCl_3)_x\ (MgX_2)_y$$

in welcher $0,3 \leq x \leq 3$, $0 \leq y \leq 20$, M ein Übergangsmetall der Gruppen VB und VIB des Periodensystems der Elemente darstellt und X für Halogen steht, aufweisen.

2. Katalysatoren nach Anspruch 1, dadurch gekennzeichnet, daß sie die Struktur einer binären festen Lösung Ti-M, deren Kristallite eine Dimension unter oder gleich 100 Å (10 nm) haben, aufweisen.

3. Katalysatoren nach Anspruch 1, dadurch gekennzeichnet, daß $2 \leq y \leq 20$.

4. Verfahren zur Herstellung von Katalysatoren nach einem der Ansprüche 1-3, dadurch gekennzeichnet, daß man das mit dem Aluminiumchlorid synkristallisierte Titantrichlorid, das Trichlorid des Metalls M und gegebenenfalls wasserfreies Magnesiumhalogenid miteinander in Berührung bringt und daß man diese Chloride einer Mahlstufe unterwirft, im Verlaufe derer die Mahlenergie mindestens gleich 3 kWh pro kg des behandelten festen Materials ist.

5. Verfahren nach Anspruch 4, dadurch gekennzeichnet, daß die Mahlenergie nicht mehr als 25 kWh pro kg des behandelten festen Materials beträgt.

6. Verfahren zur Polymerisation von Äthylen unter einem Druck zwischen 300 und 2 500 bar und bei einer Temperatur zwischen 180° und 300 °C, dadurch gekennzeichnet, daß man das Äthylen mit einem Katalysatorsystem in Berührung bringt, welches:

a) zumindest einen Katalysator nach Anspruch 1 und

b) einen Aktivator, ausgewählt aus den Hydriden und den organometallischen Verbindungen der Metalle der Gruppen I bis III des Periodensystems der Elemente umfaßt, wobei das Atomverhältnis des Metalls des Aktivators zu der Summe Ti + M zwischen 0,1 und 10 liegt und wobei die mittlere Verweilzeit des Katalysatorsystems im Polymerisationsreaktor zwischen 2 und 100 Sekunden beträgt.

7. Verfahren nach Anspruch 6, dadurch gekennzeichnet, daß man die Polymerisation in Gegenwart eines inerten Kohlenwasserstoffes mit vorzugsweise weniger als 5 Kohlenstoffatomen, wie Propan oder Butan durchführt.

8. Verfahren nach Anspruch 6 oder 7, dadurch gekennzeichnet, daß man die Polymerisation in Gegenwart von 0,04 bis 2 Vol. % eines Kettenübertragungsmittels durchführt.

9. Verfahren nach einem der Ansprüche 6-8, dadurch gekennzeichnet, daß es auf die Copolymerisation von Äthylen mit einem α-Olefin mit 3 bis 8 Kohlenstoffatomen angewendet wird.

10. Verfahren nach Anspruch 9, dadurch gekennzeichnet, daß das α-Olefin Propen ist und daß dieses in einer Menge von 15 bis 35 Gew.-% vorliegt.

11. Verfahren nach Anspruch 9, dadurch gekennzeichnet, daß das α-Olefin Buten-1 ist und daß dieses in einer Menge von 15 bis 60 Gew.-% vorliegt.

12. Verfahren zur Polymerisation von Äthylen unter einem Druck zwischen 1 und 200 bar in Lösung oder in Suspension in einem inerten flüssigen Kohlenwasserstoff mit mindestens 6 Kohlenstoffatomen,

dadurch gekennzeichnet, daß man das Äthylen mit einem Katalysatorsystem in Berührung bringt, welches :

a) zumindest einen Katalysator nach Anspruch 3 und

b) einen Aktivator, ausgewählt aus den Hydriden und den organometallischen Verbindungen der Metalle der Gruppen I bis III des Periodensystems der Elemente umfaßt, wobei das Atomverhältnis des Metalls des Aktivators zu der Summe Ti + M zwischen 1 und 1 000 liegt.